# EUROPEAN PATENT APPLICATION

(11) **EP 3 327 307 A1**
(43) Date of publication of application: **30.05.2018**
(21) Application number: 17001841.0
(22) Date of filing: 09.11.2017
(51) Int. Cl.: F16D 55/228, F16D 65/12, F16D 65/853

(54) **DISK BRAKE SYSTEM FOR MOTOR VEHICLES AND TRANSPORT MEANS**

(30) Priority: 21.11.2016 IT 201600116926
(71) Applicant: Giusto, Mario, 18010 Cervo (IM) (IT)
(72) Inventor: Giusto, Mario, 18010 Cervo (IM) (IT)
(74) Representative: Garavelli, Paolo

(57) **Abstract**

A disc brake system for motor vehicles and transport means is described, comprising: a brake disc (1) with incorporated brake pads (2); a brake caliper (7) comprising a hollow box-type body (3) containing a cooling liquid adapted to dissipate the heat generated during braking, where the hollow box-type body (3) is connected to the structure of the brake caliper (7) by guide means (6) and actuated by actuating means (5) adapted to allow the movement of the hollow box-type body (3) towards the brake pads (2) and the subsequent return towards the structure of the brake caliper (7) .

## Description

The present invention refers to a disk brake system for motor vehicles and transport means.

More in particular, the present invention aims to obtain a disk bracing system, equipped with a liquid-type cooling plant, which allows removing the overheating phenomenon for the braking system.

Current braking systems are composed of a braking caliper equipped with small pistons, which press one or more pads against the brake disk, making the motor vehicle slow down due to friction. Such friction heats the brake disk, which, after having exceeded a certain temperature threshold, reduced the braking effect, with consequent loss of control of the vehicle by the driver. Such overheating effects are more felt in heavy vehicles, trucks and the like, depending on their mass, and in sports and competition cars, due to their high speeds and the consequent necessary strong decelerations.

The current cooling of the disk exclusively occurs through venting.

JP-H02-159431-A discloses a disk brake system for motor vehicles and transport means according to the preamble of Claim 1.

Object of the present invention is solving the above prior art problems, by providing a disk brake system for motor vehicles and transport means whose feature is the reversal of the position of the pads, namely the pads are inserted in the disk along its whole extension.

The above and other objects and advantages of the invention, as will appear from the following description, are obtained by a disk brake system for motor vehicles and transport means as claimed in Claim 1. Preferred embodiments and non-trivial variations of the present invention are claimed in the dependent Claims.

It is intended that all enclosed claims are an integral part of the present disclosure.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, given as a non-limiting example, with reference to the enclosed drawings, in which:
- Figure 1 shows a preferred embodiment of the disk caliper of the present invention, in its assembled status;
- Figure 2 is a cross sectional view of the brake caliper of Figure 1;
- Figure 3 is a horizontally sectioned view of the brake caliper of Figure 1;
- Figure 4 shows a preferred embodiment of the box-shaped metallic plate for containing the cooling liquid; and
- Figure 5 is a sectional view of a preferred embodiment of the box-shaped plate with internal heat-dissipating elements.

In the above Figures, the following reference number and parts are described:
1 brake disk
2 brake pads
3 box-shaped plate containing the cooling liquid
3A projecting plate friction area
3B external heat dissipating elements
4 internal heat dissipating elements
5 small hydraulic pistons
6 fastening and guiding pins
7 caliper structure (approximate)
8 cooling liquid inlet
9 cooling liquid outlet

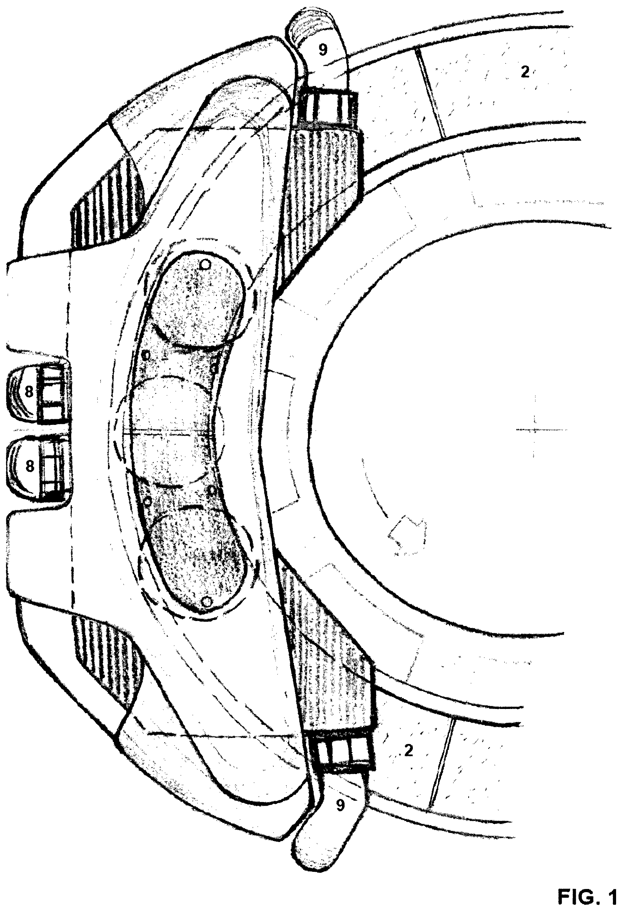

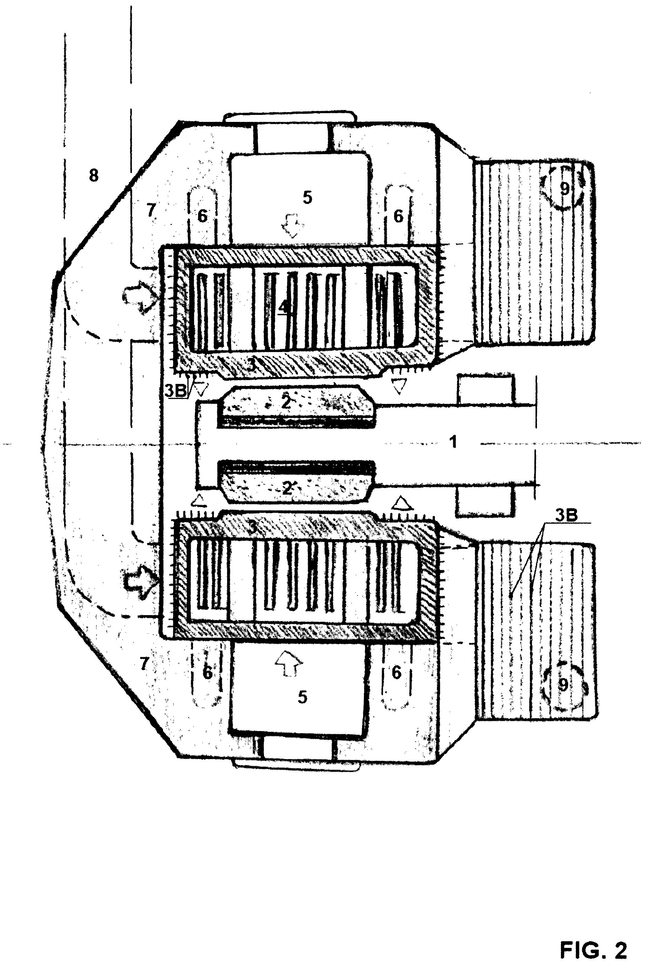

The main feature of the invention provides for the reversal of the position of the brake pads 2, namely they are inserted in the disk 1 (Figure 2) following its whole extension (Figure 1) .

In brief, the system is reversed and it is not any more the disk which needs being cooled, but its braking caliper.

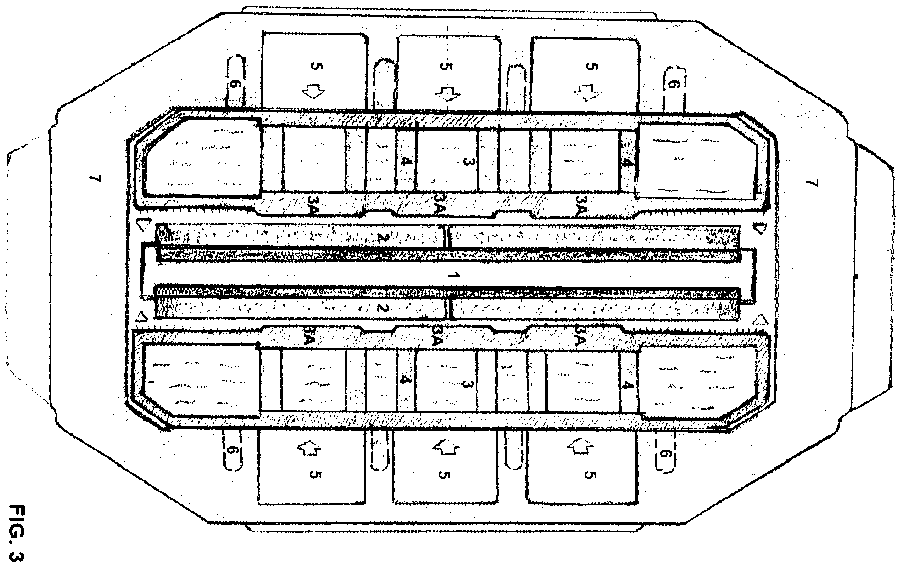

Between braking caliper and pads, a box-type, metallic plate body is inserted, preferably made of steel, cast iron, carbon or similar material, designated in the Figures with 3, which is pushed by the small hydraulic pistons against the pads, generating the necessary friction to slow down the vehicle (Figures 2 and 3).

The box-type metallic body is fasted to the structure of the caliper on suitable guiding pins or similar system (designated in the Figures with 6), adapted to allow a movement towards the brake pads and the following return towards the structure of the caliper.

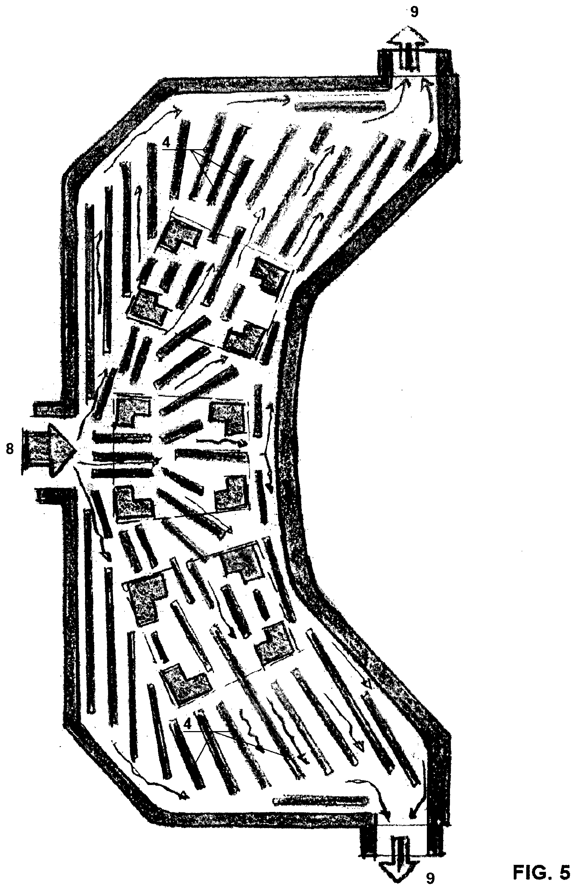

Heating by friction of the box-type metallic plate is absorbed by the liquid circulating therein, which generates an immediate and constant lowering of the temperature, allowing to check at any time the operating temperature of the brakes (Figures 3 and 5).

Inside the box-type plate, heat-dissipating bodies can be arranged, composed of blades having a reduced thickness, which enable increasing the dispersing surface, with their longitudinal positioning with respect to the sliding direction of the liquid towards the outlet hole (Figure 5).

Shape and sizes of the box-type body shown in the Figures are merely a non-limiting example, and demonstrate that the invention can be made and operated from the technical point of view.

From an approximate computation, the dispersing surface of the dissipating elements, summed to the plane surface of the box-type plate, can easily reach and exceed the plane surface of the whole disk.

The cooling liquid, even pure water, entered and circulated inside the box-type plate, generates a quick absorption of heat transmitted by the operating braking plate, immediately lowering the high developed temperatures.

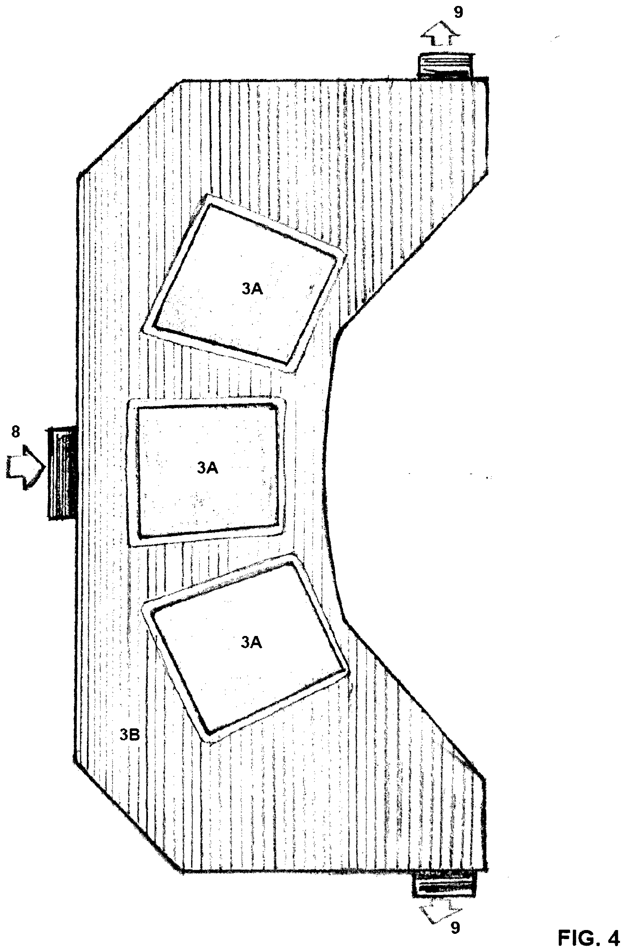

The box-type metallic body is therefore equipped with a liquid delivery tube and with one/two outlet tubes; flow rate and amount of circulating liquid can be managed depending on the temperature to be lowered and the exerted braking pressure (Figures 4-5).

Due to the heat-absorbing capability of liquid which is much greater than that of air, the dispersing surface can be dimensioned depending on necessary performances, solving every overheating problem of the braking system.

The brake cooling system can be connected to the same cooling plant of the engine.

With respect to prior systems, the system of the invention also allows reducing the weight of the braking plant, being able to use a disk with reduced sizes and thickness (Figure 1 and 2) and to use common materials having a reduced cost; moreover, due to the increased surface of brake pads, the necessary friction surface can be reduced, and consequently also the amount of necessary force pressing on the disk (Figure 4); finally, for pads with wide sizes, softer pastes and mixtures can be used, with consequent less noise and better brake modularity.

Summarizing, the disk brake system for motor vehicles and transport means of the invention substantially comprises:
- a brake disk 1 with incorporated brake pads 2;
- a brake caliper 7 comprising a hollow box-type body 3 containing a cooling liquid adapted to dissipate the heat generated during braking, the hollow box-type body 3 being connected to the structure of the brake caliper 7 by guide means 6 and actuated by actuating means 5 adapted to allow the movement of the hollow box-type body 3 towards the brake pads 2 and the subsequent return towards the structure of the brake caliper 7, the brake pads 2 being inserted in the brake disk 1 along its whole extension.

In particular, the hollow box-type body 3 is a metallic plate body.

Still in particular, the hollow box-type body 3 comprises a delivery tube 8 and at least one outlet tube 9 of the cooling liquid.

Preferably, the delivery tube 8 and the at least one outlet tube 9 of the cooling liquid are connected to a cooling system of the motor vehicle engine.

The disk brake system of the invention can further comprise heat sinks (heat-dissipating elements) 4 arranged inside the hollow box-type body 3.

These heat sinks 4 are formed of thin sheet longitudinally arranged to the flowing direction of the liquid inside the hollow box-type body 3.

Preferably, the actuating means 5 are hydraulic pistons, and the guide means 6 are pins.

The above described system allows obtaining the following benefits and advantages:
- removing the overheating phenomenon of the braking plant;
- checking and maintaining the operating temperature of the braking plant;
- reducing the sizes of the brake disk and the global weight of the braking plant;
- reducing the necessary braking force due to the reduction of the necessary contact surface;
- using pads with softer mix;
- using a mechanism which is simply manufactured and easily assembled.

## Claims

1. Disk brake system for motor vehicles and transport means comprising:
- a brake disk (1) with incorporated brake pads (2) ;
- a brake caliper (7) comprising a hollow box-type body (3) containing a cooling liquid adapted to dissipate the heat generated during braking;
said hollow box-type body (3) being connected to the structure of the brake caliper (7) by guide means (6) and actuated by actuating means (5) adapted to allow the movement of the hollow box body (3) towards the brake pads (2) and the subsequent return towards the structure of the brake caliper (7);
**characterized in that** the brake pads (2) are inserted in the brake disk (1) along its whole extension.

2. Disk brake system for motor vehicles and transport means according to claim 1, **characterized in that** the hollow box-type body (3) is a metallic plate body.

3. Disk brake system for motor vehicles and transport means according to claim 1 or 2, **characterized in that** the hollow box-type body (3) comprises a delivery tube (8) and at least one outlet tube (9) of the cooling liquid.

4. Disk brake system for motor vehicles and transport means according to claim 3, **characterized in that** the delivery tube (8) and said at least one outlet tube (9) of the cooling liquid are connected to a cooling system of the motor vehicle engine.

5. Disk brake system for motor vehicles and transport means according to any of the preceding claims, **characterized in that** it further comprises heat sinks (4) arranged inside the hollow box-type body (3).

6. Disk brake system for motor vehicles and transport means according to claim 5, **characterized in that** the heat sinks (4) are formed by thin sheet longitudinally arranged to the flowing direction of the liquid inside the hollow box-type body (3).

7. Disk brake system for motor vehicles and transport means according to any of the preceding claims, **characterized in that** the actuating means (5) are hydraulic pistons.

8. Disk brake system for motor vehicles and transport means according to any of the preceding claims, **characterized in that** the guide means (6) are pins.
